# EUROPEAN PATENT APPLICATION

(11) **EP 4 202 512 A1**
(43) Date of publication of application: **28.06.2023**
(21) Application number: 21858156.9
(22) Date of filing: 02.08.2021
(51) Int. Cl.: G02B 6/36, G02B 6/40

(54) **OPTICAL FIBER CONNECTOR MEMBER AND MANUFACTURING METHOD THEREOF**

(30) Priority: 21.08.2020 JP 2020140305
(71) Applicant: Nitto Denko Corporation, Ibaraki-shi Osaka 567-8680 (JP)
(72) Inventor: TSUDA, Koichi, Ibaraki-shi, Osaka 567-8680 (JP); FUKUURA, Nobuhiro, Ibaraki-shi, Osaka 567-8680 (JP); SHIMIZU, Yusuke, Ibaraki-shi, Osaka 567-8680 (JP)
(74) Representative: Hoffmann Eitle
(86) International application number: PCT/JP2021/028570
(87) International publication number: WO 2022/039008

(57) **Abstract**

An optical fiber connector member 1 includes an optical fiber 2 and a housing 3 into which the optical fiber 2 is inserted and that fixes the optical fiber 2. The housing 3 includes a wedge portion 8 that pressurizes the optical fiber 2 only in a first direction included in diametric directions of the optical fiber 2.

## Description

The present invention relates to an optical fiber connector member and a method of producing the optical fiber connector member.

### BACKGROUND ART

An optical connector that fixes optical fibers has conventionally been known. For example, an optical connector including a connector body having a conical hole, and a core wire fixing unit accommodated in the conical hole has been proposed (for example, see Patent Document 1).

The core wire fixing unit of the optical connector described in Patent Document 1 includes a temporary fixing chuck having a tubular shape, a permanent fixing chuck having a tubular shape corresponding to the conical hole, and a nut. Optical fibers are inserted into the temporary fixing chuck, the permanent fixing chuck, and the nut, and the nut fastens the temporary fixing chuck, thereby temporarily fixing the optical fibers with the temporary fixing chuck. The permanent fixing chuck fits a conical hole of the connector body, thereby permanently fixing the optical fibers with the core wire fixing unit.

### Citation List

### Patent Document

Patent Document 1: Japanese Unexamined Patent Publication No. 2018-180106

### SUMMARY OF THE INVENTION

### PROBLEM TO BE SOLVED BY THE INVENTION

In the core wire fixing unit described in Patent Document 1, however, the nut pressurizes the temporary fixing chuck entirely in the circumferential direction of the nut. Thus, the temporary fixing chuck is required to have high dimensional accuracy. This complicates the structure of the core wire fixing unit.

The present invention provides an optical fiber connector member that does not require high dimensional accuracy and has a simple structure and a method of producing the optical fiber connector member.

### MEANS FOR SOLVING THE PROBLEM

The present invention [1] includes an optical fiber connector member including: an optical fiber; and a fixing member into which the optical fiber is inserted, the fixing member that fixes the optical fiber, wherein the fixing member includes a pressurizing member that pressurizes the optical fiber only in a first direction included in diametric directions of the optical fiber.

In the optical fiber connector member, the pressurizing member pressurizes the optical fiber only in the first direction. Thus, the fixing member is allowed to have low dimensional accuracy in the diametric directions excluding the first direction. Therefore, the fixing member may have a simple structure.

The present invention [2] includes the optical fiber connector member described in the above [1], wherein the pressurizing member includes a wedge portion that approaches an axis of the optical fiber as the pressurizing member goes in a direction in which the optical fiber extends.

In the optical fiber connector member, the pressurizing member includes the wedge portion. Thus, the wedge portion surely fixes the optical fiber.

The present invention [3] includes the optical fiber connector member described in the above [1] or [2], wherein the optical fiber includes a plastic optical fiber.

Where the optical fiber is a glass optical fiber, however, the optical fiber is easily damaged when being pressurized with the pressurizing member.

In light of the foregoing, the optical fiber connector member of the present invention includes the optical fiber including a plastic optical fiber, and thus the optical fiber is not easily damaged even when being pressurized with the pressurizing member.

The present invention [4] includes a method of producing an optical fiber connector member described in any one of the above [1] to [3], the fixing member including: an internal member having a hole; and an external member having an opening portion, the method including: a first step of inserting the optical fiber into the hole; and a second step of disposing the internal member at the opening portion having an internal size smaller than an external size of the internal member in the first direction after the first step.

According to the method, the optical fiber can easily be fixed only by inserting the optical fiber into the hole of the internal member and thereafter disposing the internal member at the opening portion of the external member.

The present invention [5] includes the method described in the above [4], wherein in the second step, the internal member is inserted into the opening portion, the external member has an upstream side end portion and a downstream side end portion in an insertion direction in which the internal member is inserted, the upstream side end portion has an internal size larger than or equal to the external size of the internal member, and the downstream side end portion has an internal size smaller than the external size of the internal member.

According to the method, the internal member can easily be inserted into the opening portion of the external member having an upstream side end portion with an internal size larger than or equal to the external size of the internal member.

Further, when the internal member is inserted into the opening portion of the external member having the downstream side end portion with an internal size smaller than the external size of the internal member, the downstream side end portion of the external member moves the downstream side end portion of the internal member inward in the first direction. This enables the downstream side end portion of the internal member to pressurize the optical fiber. Thus, the optical fiber can be fixed in an easy way.

The present invention [6] includes the method described in the above [4] or [5], wherein the external member has a tapering portion having an internal size gradually becoming smaller in the insertion direction.

The insertion of the internal member into the opening portion of the external member causes the tapering portion to gradually move the downstream side end portion of the internal member inward in the first direction. This enables the downstream side end portion of the internal member to gradually pressurize the optical fiber. Thus, the optical fiber can be fixed while the damage to the optical fiber is suppressed as much as possible.

### EFFECTS OF THE INVENTION

The optical fiber connector member and method of producing the optical fiber connector member of the present invention do not require high dimensional accuracy and make the structure of the optical fiber connector member simple.

### BRIEF DESCRIPTION OF THE DRAWINGS

FIGS. 1A and 1B are cross-sectional views of one embodiment of the optical fiber connector member of the present invention. FIG. 1A is a side cross-sectional view thereof. FIG. 1B is a frontal cross-sectional view thereof.
FIGS. 2A to 2C illustrate the steps of producing the optical fiber connector member of FIG. 1A. FIG. 2A illustrates the step of preparing a boot and an optical fiber. FIG. 2B illustrates the first step. FIG. 2C illustrates the second step.
FIGS. 3A to 3C illustrate the steps of producing the optical fiber connector member of FIG. 1B. FIG. 3A illustrates the step of preparing a boot and an optical fiber. FIG. 3B illustrates the first step. FIG. 3C illustrates the second step.
FIGS. 4A to 4C illustrate the steps of producing of a variation of the optical fiber connector member. FIG. 4A illustrates the step of preparing a boot and an optical fiber. FIG. 4B illustrates the first step. FIG. 4C illustrates the second step.

### DESCRIPTION OF THE EMBODIMENTS

### <One Embodiment of Optical Fiber Connector Member>

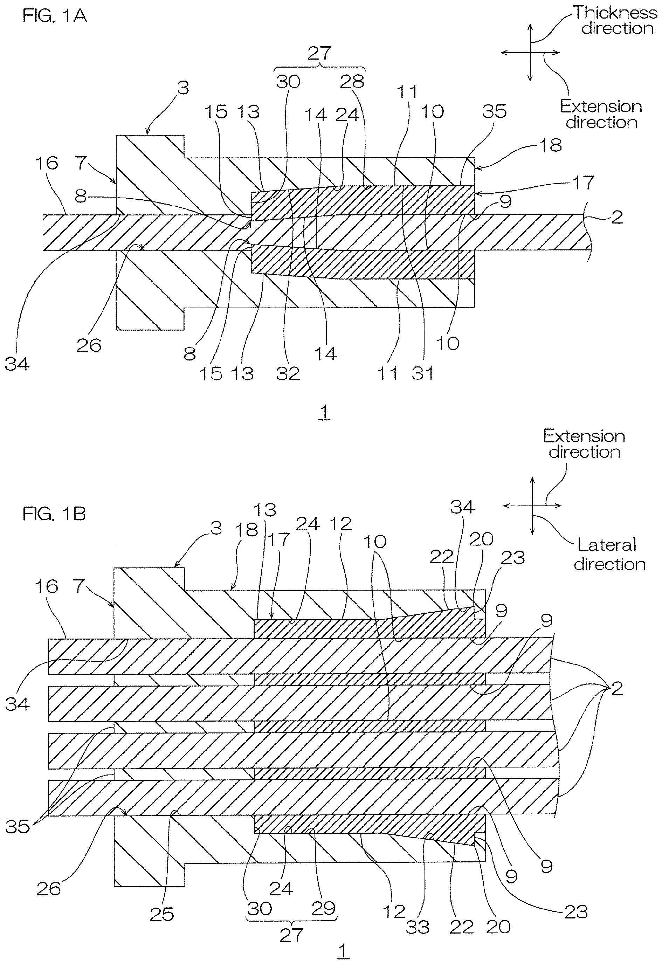

One embodiment of the optical fiber connector member of the present invention is described with reference to FIG. 1 to FIG. 3C.

As illustrated in FIG. 1A and FIG. 1B, an optical fiber connector member 1 includes a plurality of optical fibers 2 and a housing 3.

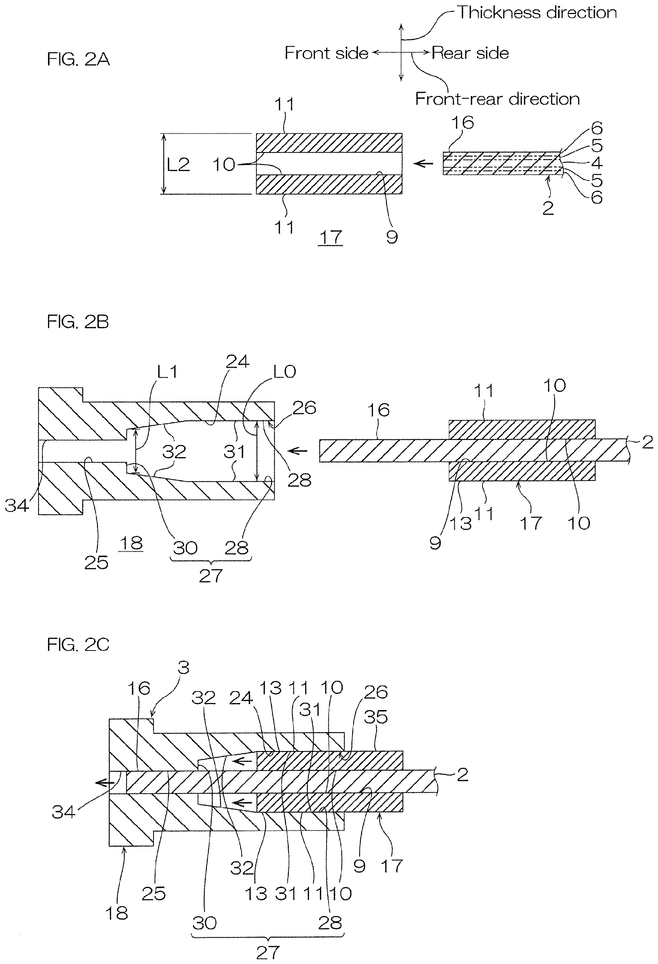

Each of the optical fibers 2 has, for example, an approximately cylindrical shape. The optical fibers 2 are disposed in a row while being separated from each other by an interval in a lateral direction. The lateral direction is included in the diametric directions of the optical fiber 2. Each of the optical fibers 2, as illustrated with the phantom lines of FIG. 2A, includes a core 4, a cladding 5, and a covering layer 6.

The core 4, the cladding 5, and the covering layer 6 are disposed outward in this order in the diametric directions of the optical fiber 2. The cladding 5 is disposed on a peripheral surface of the core 4. The covering layer 6 is disposed on a peripheral surface of the cladding 5. The core 4 has a refractive index higher than that of the cladding 5.

Examples of the materials of the core 4 and the cladding 5 include transparent materials. Examples of the transparent materials include plastic and ceramic. Examples of the plastic include resin. Examples of the resin include acrylic resin and epoxy resin. Examples of the ceramic include quartz and glass. As the materials of the core 4 and the cladding 5, plastic is preferable. When the materials of the core 4 and the cladding 5 are plastic, the core 4 and the cladding 5 form a plastic optical fiber. The plastic optical fiber has a better pressure resistance than glass does. Thus, when the optical fibers 2 including plastic optical fibers is pressurized by thickness-direction both side walls 11 (described below) of a front end portion 13 of a boot 17, the damage to the plastic optical fibers is suppressed.

### Examples of the material of the covering layer 6 include vinyl chloride resin.

Examples of the material of the covering layer 6 include lightproof materials. Each of the optical fibers 2 has a diameter of, for example, 100 µm or more, preferably 200 µm or more, and, for example, 1000 µm or less, preferably 700 µm or less.

The housing 3 is an example of a fixing member. The housing 3 has an approximately box shape. The housing 3 has a thickness. A thickness direction of the housing 3 is orthogonal to a direction in which the optical fibers 2 extend and the lateral direction. The thickness direction is an example of one direction included in the diametric directions of the optical fibers 2. The housing 3 includes the boot 17 and a ferrule 18. Preferably, the housing 3 include only the boot 17 and the ferrule 18. The housing 3 is produced by incorporating the boot 17 into the ferrule 18. The boot 17 and ferrule 18 before the incorporation are described first.

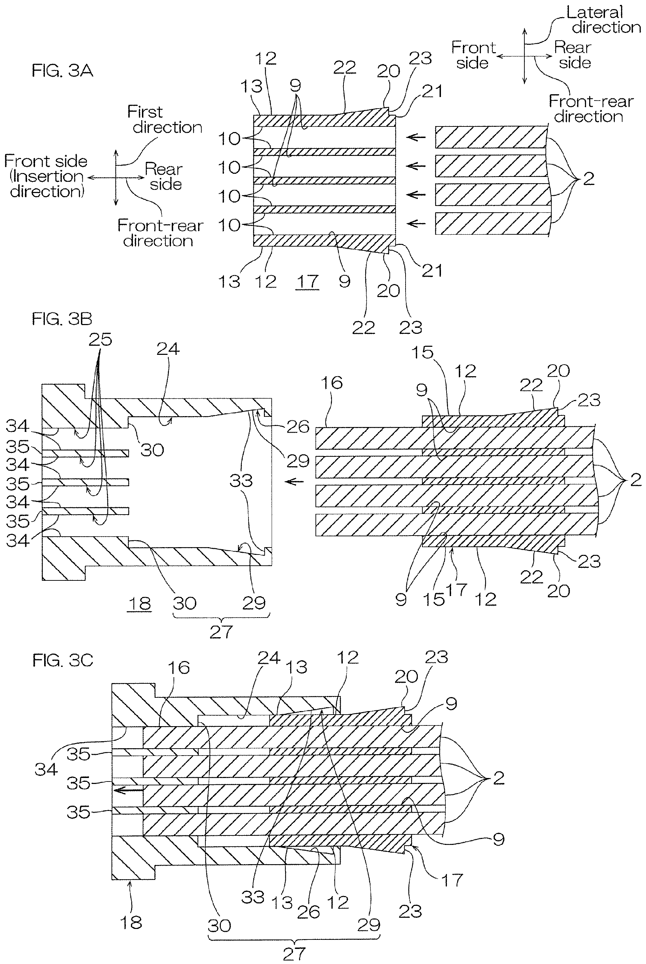

The boot 17 is an example of an internal member. As illustrated in FIGS. 2A and 3A, the boot 17 has a block shape. The boot 17 has a thickness. The thickness direction of the boot 17 is identical to the thickness direction of the housing 3. Further, the boot 17 extends in a front-rear direction. The front-rear direction is orthogonal to the thickness direction of the boot 17. The "front" of the front-rear direction means one side in an extension direction in which the optical fibers 2 extend. The "front" is an insertion direction in which the boot 17 is inserted as described below. The "rear" of the front-rear direction means the other side in the extension direction in which the optical fibers 2 extend. The "rear" is the opposite side to the "front". The boot 17 includes a plurality of through-holes 9, the thickness-direction both side walls 11, and lateral-direction both side walls 12.

The through-holes 9 penetrate the boot 17. The plurality of (four) through-holes 9 is provided in the boot 17. The plurality of through-holes 9 goes along the front-rear direction. The through-holes 9 each have a cylindrical shape. The axis of the cylindrical shape goes along the front-rear direction. The boot 17 includes inner peripheral surfaces 10 facing the through-holes 9, respectively.

The inner peripheral surfaces 10 extend straight from the rear end of the housing 3 to a front side. Each of the inner peripheral surfaces 10 has a shape extending in a straight line in a cross-sectional view taken along the extension direction of the optical fibers 2. The inner peripheral surfaces 10 are parallel to the extension direction of the optical fibers 2.

As illustrated in FIG. 2A, the thickness-direction both side walls 11 face each other in the thickness direction. An external size of both side walls 11 of the boot 17 is the same in one direction. The external size L2 of both side walls 11 is not especially limited. The external size L2 of both side walls 11 is, for example, 1 mm or more, and, for example, 2 mm or less.

As illustrated in FIG. 3A, the lateral-direction both side walls 12 face each other in the lateral direction. Each of the both side walls 12 has a second wedge portion 20. The second wedge portion 20 protrudes outward at the rear side portion of each of the lateral-direction both side walls 12. In detail, each of the second wedge portions 20 integrally has a second tapering surface 22 and a lateral surface 23. A distance between two second tapering surfaces increases toward the rear side. The lateral surfaces 23 extend in the lateral direction. The lateral surfaces 23 are continuous to the rear end edges of the second tapering surfaces 22, respectively.

The boot 17 is made of, for example, resin. Specifically, the boot 17 is harder than the covering layer 6.

The ferrule 18 is an example of an external member. As illustrated in FIG. 2B and FIG. 3B, the ferrule 18 has an approximately rectangular tube shape. The ferrule 18 has a thickness. The thickness direction of the ferrule 18 is the same as the thickness direction of the boot 17. The ferrule 18 extends in the front-rear direction. The front-rear direction is orthogonal to the thickness direction of the ferrule 18. The ferrule 18 includes a penetrating opening portion 26, a compartment wall 35, a rear inner surface 27, and a frontal inner surface 34.

One penetrating opening portion 26 is provided in the ferrule 18. The penetrating opening portion 26 penetrates the ferrule 18. The penetrating opening portion 26 extends in the front-rear direction. The penetrating opening portion 26 includes a rear side opening portion 24 and a frontal side opening portion 25.

The rear side opening portion 24 is a rear side portion of the penetrating opening portion 26.

The frontal side opening portion 25 is disposed at the front side of the rear side opening portion 24. The frontal side opening portion 25 is continuous to (communicates with) the rear side opening portion 24. The frontal side opening portion 25 branches into a plurality of (four) portions from the front end of the rear side opening portion 24. The frontal side opening portions 25 are next to each other in the lateral direction.

The compartment wall 35 defines the adjacent frontal side opening portions 25. A plurality of the compartment walls 35 is provided in the ferrule 18.

The rear inner surface 27 forms the rear side opening portion 24. The rear inner surface 27 includes a first inside surface 28, a second inside surface 29, and a butted surface 30.

As illustrated in FIG. 2B, two first inside surfaces 28 are provided in the ferrule 18. The two first inside surfaces 28 are disposed in the thickness direction while being separated from each other by an interval. Each of the two first inside surfaces 28 includes a third straight surface 31 and a third tapering surface 32 as an example of a tapering portion.

The third straight surfaces 31 extend from the rear end of the ferrule 18 toward the front side. The third straight surfaces 31 are parallel to the front-rear direction. Each of the third straight surfaces 31 is a flat surface. A facing distance L0 between the two third straight surfaces 31 is an example of the internal size of an upstream side end portion of the ferrule 18. The facing distance L0 between the two third straight surfaces 31 is not especially limited. The facing distance L0 between the two third straight surfaces 31 is preferably longer than or equal to the external size L2 of the both side walls 11 of the boot 17. The ratio (L0/L2) of the facing distance L0 between the two third straight surfaces 31 to the external size L2 of the both side walls 11 is, for example, 1 or more, preferably 1.01 or more, and, for example, 1.2 or less, preferably 1.1 or less. Specifically, the facing distance L0 between the two third straight surfaces 31 is, for example, 0.5 mm or more, preferably 1 mm or more, and, for example, 3 mm or less, preferably 2 mm or less.

The third tapering surfaces 32 extend from the front end edges of the third straight surfaces 31, respectively, toward the front side. The third tapering surfaces 32 are inclined in the front-rear direction. A facing distance between the two third tapering surfaces 32 shortens toward the front side. In other words, the opening area of the rear side opening portion 24 defined by the two third tapering surfaces 32 becomes smaller toward the front side. A facing distance L1 between the front end edges of the two third tapering surfaces 32 is not especially limited. The facing distance L1 between the front end edges of the two third tapering surfaces 32 is preferably shorter than the external size L2 of the both side walls 11 of the boot 17. The ratio (L1/L2) of the facing distance L1 between the front end edges of the two third tapering surfaces 32 to the external size L2 of the both side walls 11 of the boot 17 is, for example, less than 1, preferably 0.95 or less, and, for example, 0.8 or more, preferably 0.9 or more. Specifically, the facing distance L1 between the front end edges of the two third tapering surfaces 32 is, for example, 0.5 mm or more, preferably 1 mm or more, and, for example, 3 mm or less, preferably 2 mm or less.

As illustrated in FIG. 3B, two second inside surfaces 29 are provided in the ferrule 18. The two second inside surfaces 29 are disposed in the lateral direction while being separated from each other by an interval. The second inside surfaces 29 couple both end edges in the lateral direction of one of the first inside surfaces 28 with both end edges in the lateral direction of the other first inside surface 28. The second inside surfaces 29 extend in the thickness direction. The second inside surfaces 29 have the same shapes as the external surfaces of the lateral-direction both side walls 12 of the boot 17. Particularly, each of the second inside surfaces 29 includes a fitted portion 33 corresponding to the second wedge portion 20.

As illustrated in FIG. 2B and FIG. 3B, butted surfaces 30 are continuous to the first inside surfaces 28 and the second inside surfaces 29. Specifically, the butted surfaces 30 extend from the front end edges of the third tapering surfaces 32 toward the inside in the thickness direction. The butted surfaces 30 extend from the front end edges of the second inside surfaces 29, respectively, toward the inside in the lateral direction. Although not illustrated in FIG. 2B and FIG. 3B, the butted surfaces 30 have an approximately rectangular frame shape in a back view (when being viewed from the rear side) (when being viewed from the opposite side to the insertion direction).

The frontal inner surfaces 34 form the frontal side opening portions 25. Each of the frontal inner surfaces 34 is provided on an outer wall and the compartment wall 35. A plurality of frontal inner surfaces 34 is provided in the ferrule 18. The frontal inner surfaces 34 are continuous to inner end edges of the butted surfaces 30. The frontal inner surfaces 34 extend from the inner end edges of the butted surfaces 30 toward the front side and reach the front end of the ferrule 18. The frontal inner surfaces 34 go along the front-rear direction. Each of the frontal inner surfaces 34 integrally has first facing surfaces facing each other in the thickness direction and second facing surfaces facing each other in the lateral direction.

The ferrule 18 is, for example, made of resin. The ferrule 18 is, for example, harder than the boot 17.

### <Method of Producing Optical Fiber Connector Member>

Next, a method of producing the optical fiber connector member 1 is described with reference to FIGS. 2A to 3C. The method of producing the optical fiber connector member 1 includes the incorporation of the boot 17 into the ferrule 18.

The method of producing the optical fiber connector member 1 includes a first step and a second step.

### <First Step>

As illustrated in FIG. 2A and FIG. 3A, in the first step, the optical fibers 2 are inserted into the through-holes 9 of the boot 17, respectively. As illustrated with the arrows of FIGS. 2A and 3A, the front end portions 16 of the optical fibers 2 are inserted into the through-holes 9, respectively, from the rear end of the boot 17.

Subsequently, as illustrated in FIGS. 2B and 3B, the front end portions 16 of the optical fibers 2 are exposed from the boot 17.

### <Second Step>

The second step is carried out after the first step. As illustrated with the arrows of FIGS. 2B and 3B, in the second step, the boot 17 and the plurality of optical fibers 2 are disposed in the ferrule 18. In other words, in the second step, the boot 17 is incorporated into the ferrule 18.

As illustrated in FIGS. 2C and 3C, in the second step, the boot 17 is inserted into the rear side opening portion 24. First, as illustrated in FIGS. 2B and 3B, the front end portions 16 of the optical fibers 2 and the boot 17 are disposed at the rear side of the ferrule 18. Subsequently, as illustrated in FIGS. 2C and 3C, the front end portions 16 of the optical fibers 2 and the boot 17 are inserted into the rear side opening portion 24 from the rear side of the ferrule 18.

As illustrated in FIG. 2C, at the insertion, while the thickness-direction both side walls 11 of the boot 17 is guided by (slid along) the third straight surfaces 31, the boot 17 is inserted into the rear side opening portion 24. With the insertion, the front end portions 16 of the optical fibers 2 are inserted into the rear side opening portion 24 and the frontal side opening portions 25 in this order.

As illustrated with the arrows of FIG. 2C and in FIG. 1A, the boot 17 is further moved to the front side. Then, in conformity with the shapes of the third tapering surfaces 32 of the ferrule 18, the thickness-direction both side walls 11 at the front end portion 13 of the boot 17 approach each other in the thickness direction. Specifically, as the insertion of the boot 17 progresses, the third tapering surfaces 32 of the ferrule 18 pressurizes (pushes) the thickness-direction both side walls 11 at the front end portion 13 of the boot 17 toward the centers of the through-holes 9. This forms wedge portions 8 (described in detail below).

Thereafter, when the front end surface of the boot 17 is brought into contact with the butted surfaces 30 of the ferrule 18, the forward movement of the boot 17 is suppressed. Thus, the progression of the above-described engagement (pressurization) stops. The boot 17 does not enter the frontal side opening portions 25.

The optical fibers 2 are inserted into the frontal side opening portions 25, respectively.

This insertion fixes the optical fibers 2 to the housing 3.

On the other hand, as illustrated in FIG. 3C, while the lateral-direction both side walls 12 of the boot 17 are guided by (slid along) the second inside surfaces 29, the boot 17 is moved to the front side. Then, as illustrated in FIG. 1B, the second wedge portions 20 fit the fitted portions 33. The lateral surfaces 23 are wedged into the fitted portions 33. Thus, the removal of the boot 17 from the ferrule 18 toward the rear side is suppressed.

In this manner, the optical fiber connector member 1 including the plurality of optical fibers 2 and the housing 3 fixing the optical fibers 2 is produced.

As illustrated in FIG. 1A, the optical fiber connector member 1 includes the wedge portions 8. The wedge portions 8 are included in the thickness-direction both side walls 11 at the front end portion 13 of the boot 17. The wedge portions 8 are formed at the portions facing each other in the thickness direction on the inner peripheral surface 10 of the boot 17. On the other hand, as illustrated in FIG. 1B, the wedge portions 8 are not formed at the portions facing each other in the lateral direction on the inner peripheral surface 10. The wedge portions 8, as illustrated in FIG. 1A, have a wedge shape. The wedge portions 8 approach each other toward the centers in the diametric direction of the optical fibers 2. When being projected in the front-rear direction, the wedge portions 8 are disposed at the centers in the diametric direction of the through-holes 9 with respect to the rear end portions of the inner peripheral surfaces 10 facing each other in the thickness direction and the frontal inner surfaces 34 facing each other in the thickness direction.

The wedge portions 8 are engaged into the optical fibers 2. This suppresses the movement of the optical fibers 2 in the direction in which the optical fibers 2 extend.

The wedge portions 8 are each formed of a first tapering surface 14 and a coupling surface 15.

FIG. 1A illustrates a pair of first tapering surfaces 14. However, although not illustrated in the drawings of the present application, a pair of first tapering surfaces 14 is provided to each of the through-holes 9 in the boot 17.

The first tapering surfaces 14 are inclined in the direction in which the optical fibers 2 extend. The distance between the first tapering surfaces 14 facing in the thickness direction gradually shortens toward the front side. In other words, the opening areas of the through-holes 9 defined by the first tapering surfaces 14 gradually become smaller toward the front side.

The coupling surfaces 15 are provided to the first tapering surfaces 14 one-to-one. Each of the coupling surfaces 15 couples the front end edge of the first tapering surface 14 with the rear end edge of the frontal inner surface 34 facing the first tapering surface 14 in the thickness direction. The coupling surfaces 15 extend in the thickness direction. The coupling surfaces 15 are internal parts of the front end surface of the boot 17. The first coupling surfaces 15 suppress the forward movement of the optical fibers 2 to the front side with respect of the boot 17.

Further, in the optical fiber connector member 1, the thickness-direction both side walls 11 at the front end portion 13 of the boot 17 pressurize the optical fibers 2 toward the axes of the optical fibers 2. The thickness-direction both side walls 11 at the front end portion 13 of the boot 17 are an example of the pressurizing member. Specifically, the thickness-direction both side walls 11 at the front end portion of the boot 17 are inserted along the third tapering surfaces 32 toward the front side (by applying pressure), thereby allowing the third tapering surfaces 32 to pressurize the thickness-direction both side walls 11 and the thickness-direction both side walls 11 to pressurize the optical fibers 2 from both sides in the thickness direction.

### <Operations and Effects of One Embodiment>

In the optical fiber connector member 1, as illustrated in FIG. 1A, the thickness-direction both side walls 11 at the front end portion 13 of the boot 17 pressurize the optical fibers 2 in the thickness direction. This allows low dimensional accuracy of the housing 3 in a direction other than the thickness direction, specifically, in the lateral direction. Specifically, the lateral-direction both side walls 12 of the boot 17 are allowed to have low dimensional accuracy. This allows the housing 3 including the boot 17 to have a simple structure.

In the optical fiber connector member 1, the thickness-direction both side walls 11 at the front end portion 13 of the boot 17 include the wedge portions 8. This enables the thickness-direction both side walls 11 at the front end portion 13 of the boot 17 to surely fix the optical fibers 2.

When the optical fibers 2 are glass optical fibers, however, the optical fibers 2 are easily damaged by the contact and pressurization of the wedge portions.

In the optical fiber connector member 1, however, the optical fibers 2 are plastic optical fibers and thus are not easily damaged while being pressurized by the thickness-direction both side walls 11 at the front end portion 13 of the boot 17.

According to this method, the optical fibers 2 can easily be fixed only by the insertion of the optical fibers 2 into the through-holes 9 of the boot 17 and subsequent disposition of the boot 17 at the rear side opening portion 24 of the ferrule 18.

According to this method, the boot 17 is easily inserted into the rear side opening portion 24 of the ferrule 18 having the third straight surfaces 31 with an internal size L0 larger than or equal to the external size L2 of the boot 17.

When the boot 17 is inserted into the rear side opening portion 24 of the ferrule 18 having the third tapering surfaces 32 with an internal size L1 smaller than the external size L2 of the boot 17, the thickness-direction both side walls 11 of the boot 17 move inward in the thickness direction in conformity with the shapes of the third tapering surfaces 32 of the ferrule 18. This enables the third tapering surfaces 32 to pressurize the thickness-direction both side walls 11 at the front end portion 13 of the boot 17 and the thickness-direction both side walls 11 of the front end portion 13 at the boot 17 to pressurize the optical fibers 2 from both sides in the thickness direction. Thus, the optical fibers 2 can be fixed in an easy way.

When the boot 17 is inserted into the rear side opening portion 24 of the above-described ferrule 18, the third tapering surfaces 32 of the ferrule 18 gradually moves (pressurizes) the thickness-direction both side walls 11 at the front end portion 13 of the boot 17 inward in the lateral direction. This enables the thickness-direction both side walls 11 at the front end portion 13 of the boot 17 to gradually pressurize the optical fibers 2. Thus, the optical fibers 2 are fixed while the damage to the optical fibers 2 is suppressed as much as possible.

### <Variations>

In each of the following variations, the same members and steps as in the above-described one embodiment will be given the same numerical references and the detailed descriptions will be omitted. Further, the variations can have the same operations and effects as those of one embodiment unless especially described otherwise. Furthermore, the first embodiment and the variations can appropriately be combined.

Although not illustrated, the shapes of the wedge portions 8 are not especially limited. For example, the wedge portions 8 may have an approximately rectangular shape in the cross-sectional view.

Although not illustrated, the second wedge portions 20 may be provided on the thickness-direction both side walls 11 of the boot 17.

A variation may include a single optical fiber 2.

The housing 3 may be composed of one member in a variation. In the variation, the housing 3 is included in the inside surface facing the through-holes. The inside surface has also a wedge portion.

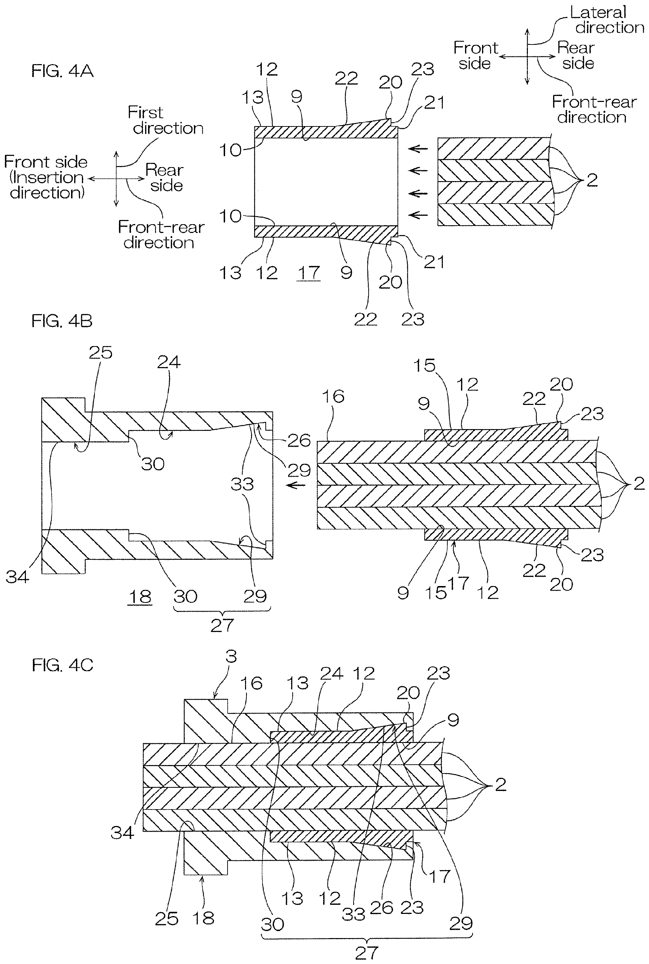

As illustrated in FIG. 4B, the ferrule 18 may have only one frontal side opening portion 25. The ferrule 18 does not include the compartment walls 35 of one embodiment.

As illustrated in FIG. 4A, the optical fibers 2 may be in contact with each other in the lateral direction.

As illustrated in FIG. 4C, the optical fibers 2 are inserted into one frontal side opening portion 25.

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The production method is used for producing optical fiber connector members.

### Description of Reference Numerals

- 1: optical fiber connector member
- 2: optical fiber
- 2: plastic optical fiber
- 3: housing (fixing member)
- 8: wedge portion
- 9: through-hole
- 17: boot (internal member)
- 18: ferrule (external member)
- 24: rear side opening portion
- 32: third tapering surface (tapering portion)
- AL: axis
- L0: internal size (upstream side end portion)
- L1: internal size (downstream side end portion)
- L2: external size (thickness-direction both side walls of the boot)

## Claims

1. An optical fiber connector member comprising:
an optical fiber; and
a fixing member into which the optical fiber is inserted, the fixing member that fixes the optical fiber, wherein
the fixing member includes a pressurizing member that pressurizes the optical fiber only in a first direction included in diametric directions of the optical fiber.

2. The optical fiber connector member according to claim 1, wherein the pressurizing member includes a wedge portion that approaches an axis of the optical fiber as the pressurizing member goes in a direction in which the optical fiber extends.

3. The optical fiber connector member according to claim 1 or 2, wherein the optical fiber includes a plastic optical fiber.

4. A method of producing an optical fiber connector member according to any one of claims 1 to 3, the fixing member comprising: an internal member having a hole; and an external member having an opening portion,
the method comprising:
a first step of inserting the optical fiber into the hole; and
a second step of disposing the internal member at the opening portion having an internal size smaller than an external size of the internal member in the first direction after the first step.

5. The method according to claim 4, wherein
in the second step, the internal member is inserted into the opening portion,
the external member has an upstream side end portion and a downstream side end portion in an insertion direction in which the internal member is inserted,
the upstream side end portion has an internal size larger than or equal to the external size of the internal member, and
the downstream side end portion has an internal size smaller than the external size of the internal member.

6. The method according to claim 4 or 5, wherein
the external member has a tapering portion having an internal size gradually becoming smaller in the insertion direction.
